(19) Europäisches Patentamt
European Patent Office
Office européen des brevets

(11) **EP 4 224 212 A1**

(12) **EUROPEAN PATENT APPLICATION**

(43) Date of publication:
**09.08.2023 Bulletin 2023/32**

(21) Application number: **22157181.3**

(22) Date of filing: **17.02.2022**

(51) International Patent Classification (IPC):
**G01S 13/89** (2006.01)    **G01S 13/88** (2006.01)
**G01S 13/86** (2006.01)    **G01S 13/58** (2006.01)
**G01S 7/41** (2006.01)

(52) Cooperative Patent Classification (CPC):
**G01S 13/89; G01S 7/415; G01S 13/589;
G01S 13/867; G01S 13/887**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.02.2022 EP 22155189**

(71) Applicant: **Rohde & Schwarz GmbH & Co. KG
81671 München (DE)**

(72) Inventor: **Schnattinger, Georg, Dr.-Ing.
84405 Dorfen (DE)**

(74) Representative: **Rupp, Christian et al
Mitscherlich PartmbB
Patent- und Rechtsanwälte
Karlstraße 7
80333 München (DE)**

(54) **METHOD AND SYSTEM FOR RF IMAGING**

(57)    The invention relates to method (10, 10') for radio frequency, RF, imaging, comprising the steps of: capturing (11) a series of raw measurement data (41) of a person (31) and/or object, wherein at least a part of the person and/or object moves during the capturing of the series of raw measurement data (41); and reconstructing (13) RF images based on the raw measurement data and on movement data, wherein the movement data are used to reduce a motion blurring caused by the movement of the at least one part of the person and/or object in at least one of the reconstructed RF images.

10

```
┌─────────────────────────────┐
│      capturing raw data      │ ── 11
└─────────────────────────────┘
              │
              ▼
┌─────────────────────────────┐
│    reconstructing RF images  │ ── 13
└─────────────────────────────┘
```

Fig. 1

EP 4 224 212 A1

**Description**

TECHNICAL FIELD OF THE INVENTION

The invention relates to a method and a system for RF imaging. In particular, the invention relates to improving the imaging quality of millimeter wave scanners.

BACKGROUND OF THE INVENTION

Personnel security scanners which operate with millimeter wave radiation are commonly used for threat detection at security checkpoints, e.g., in airports.

Conventional used security scanners thereby require the person under investigation to stand still during a security scan. A movement of the persons during the examination can cause unwanted motion blurring in the recorded image.

A conventional security scanner is for example known from W. F. Moulder et al., "Development of a high-throughput microwave imaging system for concealed weapons detection", 2016 IEEE International Symposium on Phased Array Systems and Technology (PAST), 2016, pp. 1-6, doi: 10.1109/ARRAY.2016.7832573.

A new technology for personnel screening applications are walk-through personnel security scanners operating with millimeter wave radiation. With this technology, the persons under investigation do not need to stop walking during a scan and, thus, the throughput of security checks can be increased.

To avoid motion blurring and ensure a high threat detection performance of such walk-through scanners, the maximum allowed walking speed is typically limited. However, this limits the throughput, which is the key advantage of the walk-through scanner technology. Furthermore, a fast movement of certain body parts of a person, e.g. arms or legs, during a walk-through can also cause motion blurring in the resulting images.

Thus, it is an objective to provide an improved method and an improved system for RF imaging, which avoid the above-mentioned disadvantages. In particular, it is an objective to reduce motion blurring in RF imaging.

SUMMARY OF THE INVENTION

The object of the present invention is achieved by the solution provided in the enclosed independent claims. Advantageous implementations of the present invention are further defined in the dependent claims.

According to a first aspect, the invention relates to a method for radio frequency, RF, imaging, comprising the steps of: capturing a series of raw measurement data of a person and/or object, wherein at least a part of the person and/or object moves during the capturing of the series of raw measurement data; reconstructing RF images based on the raw measurement data and on movement data, wherein the movement data are used to reduce a motion blurring caused by the movement of the at least one part of the person and/or object in at least one of the reconstructed RF images.

This achieves the advantage that motion blurring in the RF images can be reduced. The motion blurring is, for instance, caused by some body parts (e.g., arms or legs) of the person that are moved during the capturing process. Motion blurring depends on the speed of motion with respect to the antenna unit of the RF imaging unit. Since arms are moving faster than the torso during forward motion, they are more heavily affected by motion blurring. Relative motions between different body parts are normally not a reason for motion blurring.

The method can be carried out by a security scanner, e.g., a walk-through security scanner or millimeter wave scanner. For instance, during a scan of a walking person, certain body parts of the person, such as arms or legs, move faster than a threshold velocity of the scanner, causing the motion blurring in some or all of the RF images. The threshold velocity of a certain RF imaging unit corresponds to the maximum movement speed of a point target, where no motion blurring effects can be observed in conventionally reconstructed RF images.

The motion blurring can also be caused by a movement of a part of the object. The object can be an external object under investigation. For example, products can be analyzed by this invention as well. This can be done while the products are move on a conveyer belt for example. However, the object can also be a part of the RF imaging system carrying out the method, e.g., a movable antenna unit of the system.

For example, the movement data comprise a movement velocity of two or more parts of the person (body parts) and/or the object, wherein at least two of the two or more parts move with different movement velocities. In particular, the movement data can comprise a relative velocity of the two or more parts. The motion blurring is, for instance, caused by the movement of some but not all of the two or more parts of the object and/or person.

The raw measurement data can represent a series of RF reflection or transmission images, in particular millimeter wave reflection or transmission images. The reconstructed RF images can be reconstructed versions of said RF reflection or transmission images in which a motion blurring was removed or reduced.

For instance, the raw measurement data are captured by a suitable RF imaging unit. The imaging unit may comprise an emitter configured to emit RF radiation (e.g., millimeter wave radiation) towards the person and/or object, and a detector to detect a reflection of said RF radiation from the person and/or object.

The (reconstructed) RF images can be millimeter wave (mmWave) and/or microwave images, i.e., images recorded with radiation in a millimeter wave and/or microwave wavelength range, e.g. 1mm to 100cm (ca. 300 GHz to 300 MHz). Preferably the wavelength is higher than 1 GHz, 2 GHz or higher than 3 GHz.

In an embodiment, the method comprises the further step of: determining the movement data, wherein the movement data comprise a movement velocity of the at least one moving part of the person and/or object.

In particular, the movement data is determined prior to the reconstruction of the RF images.

In an embodiment, the movement data are determined based on an analysis of RF images that are generated based on the raw measurement data. These RF images comprise the blurring effect. This achieves the advantage that no additional measurement equipment, e.g. motion sensors, are required to reduce motion blurring due to movement.

The reconstructed RF images may correspond to the (for example conventionally) generated RF images after removal/reduction of the motion blurring. In other words, the reconstructed RF images can be improved versions of the (for example conventionally) generated (for example constructed) RF images. The motion blurring can be present in one, some or all of the (for example conventionally) generated RF images and can be significantly removed in the corresponding reconstructed RF images. In that approach, the raw measurement data are used twice. A first time to generate RF image conventionally which then comprise motion blurring. Based on those images, movement data are determined. A second time to generate reconstructed RF images by using the determined movement data. These reconstructed RF images are then free of motion blurring or comprise less motion blurring.

In an example, the method further comprises the step of: determining a pose of the person and/or an orientation of the object in at least one of the generated RF images.

For instance, the pose indicates postures and/or positions of body parts of the person in the respective RF image.

The movement data can comprise the posture and/or position of the moving body part (or part of the object) together with its respective movement velocity.

In an embodiment, the movement velocity of the at least one part of the person and/or object is determined based on a displacement of voxels in at least one of the (for example conventionally) generated RF images.

The (for example conventionally) generated RF images and/or the reconstructed RF images can be 3D images comprising of a plurality of voxels.

In an embodiment, the movement data are determined based on a measurement of a motion sensor, in particular a camera, a laser, or a sonic sensor, during the capturing of the series of raw measurement data. The motion sensor could also be a sensor indicating the speed of a conveyor belt or a robot carrying the object.

According to an example, the movement data can be determined based on both the analysis of (for example conventionally) generated RF images and on the measurement from the motion sensor.

In an embodiment, the step of reconstructing the RF images comprises the following sub-steps: successively applying (or choosing) different movement data to the raw measurement data; for each of the different movement data, evaluating the motion blurring of a reconstructed RF image by using a cost function; and selecting at least one reconstructed RF image as designated RF image based on the result of the evaluation.

The selected RF image can be the reconstructed RF image for which the removal of motion blurring was most efficient. This selected RF image can be used as designated image, i.e. as resulting reconstructed image, wherein all other non-selected reconstructed RF images are discarded. The different movement data that are applied successively to the raw data can be known movement data that are saved in a memory.

In an embodiment, during reconstruction of the RF images, the movement of the at least one part of the person and/or object is approximated as (or assumed to be) a one-dimensional or two-dimensional or three-dimensional movement.

In an embodiment, during reconstruction of the RF images, the movement of the at least one part of the person and/or object is approximated as a one-dimensional movement, in particular along a main direction of motion of the person and/or object.

In an embodiment, the reconstructed RF images are used for threat detection or non-destructive testing.

In particular, the reduced motion blurring in the reconstructed RF images can increase the threat detection performance or the accuracy when analyzing a product for the presence of any defects that is carried by a conveyor belt or by a robot.

In an embodiment, the method comprises the further step of: generating a video sequence based on the reconstructed RF images.

The processed (reconstructed) RF images can form frames of the video sequence.

According to a second aspect, the invention relates to a system for radio frequency, RF, imaging, comprising: an RF imaging unit configured to capture a series of raw measurement data of a person and/or object, wherein at least a part of the person and/or object moves during the capturing of the series of raw measurement data; and a processing unit configured to reconstruct RF images based on the raw measurement data and on movement data; wherein the processing unit is configured to use the movement data to reduce a motion blurring caused by the movement of the at least one part of the person and/or object in at least one of the reconstructed RF images.

The system can be a radar based imaging system and the imaging unit can be a radar imaging unit. More specifically, the system can be a millimeter wave or microwave scanner. The system can also be used for non-destructive testing.

For instance, the imaging unit can comprise an emitter configured to emit RF radiation, in particular millimeter wave radiation, towards the person, and a receiver configured to receive a reflection of the RF radiation from the person. The imaging unit can be configured to capture the series of RF images based on said reflections.

The processing unit can comprise a microprocessor and/or a memory.

In an embodiment, the processing unit is configured to determine the movement data, wherein the movement data comprise a movement velocity of the at least one moving part of the person and/or object.

In an embodiment, the processing unit is configured to (for example conventionally) generate RF images based on the raw measurement data, wherein the processing unit is further configured to determine the movement data based on an analysis of the (conventionally) generated RF images.

In an embodiment, the processing unit is configured to determine the movement velocity of the at least one part of the person and/or object based on a displacement of voxels in at least one of the (for example conventionally) generated RF images.

In an embodiment, the system comprises a motion sensor, in particular a camera, a laser, or a sonic sensor or a sensor indicating the speed of a conveyor belt or robot carrying the object; wherein the processing unit is configured to determine the movement data based on a measurement of the motion sensor during the capturing of the series raw measurement data.

For example, during the reconstruction of the RF images, the processing unit can be configured to approximate or assume the movement of the at least one part of the person and/or object as a two-dimensional or three-dimensional movement.

Alternatively, during the reconstruction of the RF images, the processing unit can be configured to approximate or assume the movement of the at least one part of the person and/or object as a one-dimensional movement, in particular along a main direction of motion of the person and/or object.

In particular, the processing unit can further be configured to determine a pose of the person and/or orientation of the object. For instance, the pose indicates a posture and/or position of body parts of the person or parts of the object in the respective RF image.

For example, the processing unit can also be configured to determine the movement velocity based on a cost function.

In particular, the processing unit can be configured to successively applying (choosing) different movement data to the raw measurement data; for each of the different movement data, to evaluate the motion blurring of a reconstructed RF image by using a cost function; and to select at least one reconstructed RF image as designated RF image based on the result of the evaluation.

The system can be used to acquire RF images of persons or objects, in particular moving persons or objects.

In an embodiment, the system is a walk-through security scanner. The imaging unit can be configured to capture the series of RF images while the person walks through a defined examination area of the security scanner. In another embodiment, the system is a production scanner used for analyzing products. It could be possible that for example parts of a car (for example a car wing) which are carried by a conveyor belt or a robot are analyzed whether they are undamaged before they are further used. This analysis could be performed during the movement of the parts. This analysis is a non-destructive testing (NDT). The system could be arranged within or at the end of a production line.

Preferably, the security scanner is a millimeter wave or micro wave scanner which can be configured for whole-body imaging of the person or for the whole object.

In particular, the reduction of the motion blurring can allow for a higher walking speed and, thus, a larger throughput of the walk-through scanner which can further decrease the cost per screening. In addition, the objects to be analyzed could also be moved faster (for example a higher speed of the conveyer belt or the robot).

Alternatively, the system can be a conventional security scanner that requires the person to stand still during acquisition of the series of RF images. In this case, the motion blurring is, for instance, caused by the person moving the at least one body part during the capture of the RF images.

The system can use the processed RF images for threat detection, e.g. for the detection of hidden objects under the person's clothes.

In a further example, the processing unit can be configured to generate a video and/or an animated image of the person and/or object based on the reconstructed RF images.

The above description with regard to the method according to the first aspect of the present invention is correspondingly valid for the system according to the second aspect of the invention.

BRIEF DESCRIPTION OF THE DRAWINGS

The invention will be explained in the followings together with the figures.

Fig. 1      shows a flow diagram of a method for RF imaging according to an embodiment;

Fig. 2      shows a flow diagram of a method for RF imaging according to an embodiment;

Fig. 3      shows a schematic diagram system for RF imaging according to an embodiment;

Fig. 4      shows a flow diagram of a method for RF imaging according to an embodiment;

Fig. 5a      shows a flow diagram of a method for RF imaging according to an embodiment;

Fig. 5b      shows a flow diagram of a method for determining movement data according to an embodiment;

Fig. 5c      shows a flow diagram of a method for RF imaging according to an embodiment; and

Fig. 6      shows a schematic diagram of an algorithm for image processing according to an embodiment.

DETAILED DESCRIPTION OF THE PREFERRED EMBODIMENTS

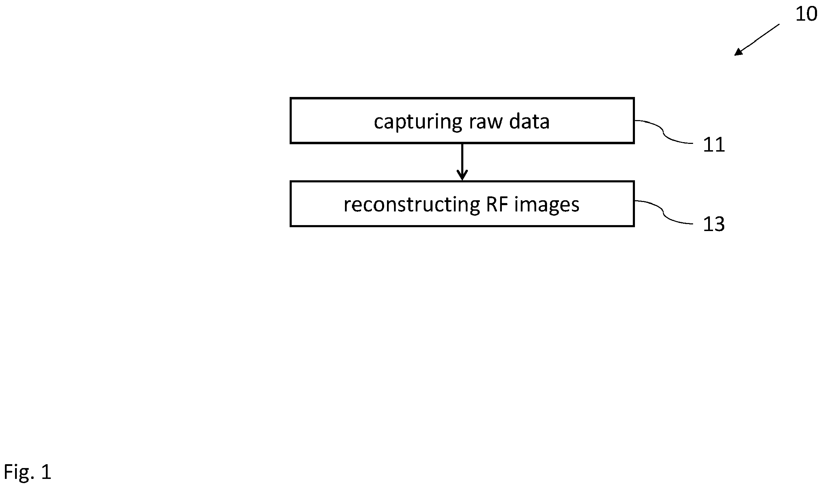

Fig. 1 shows a flow diagram of a method 10 for RF imaging according to an embodiment.
The method 10 comprises the steps of:

- capturing 11 a series of raw measurement data of a person and/or object, wherein at least one part of the person and/or object moves during the capturing of the series of raw measurement data;
- reconstructing 13 RF images based on the raw measurement data and on movement data, wherein the movement data are used to reduce a motion blurring in at least one of the reconstructed RF images, wherein the motion blurring is caused by the movement of the at least one part of the person and/or object.

The method 10 can be used to compensate for motion blurring in RF imaging, in particular motion blurring that is caused by a quick movement of certain body parts of the person (e.g., arms or legs) or at least parts of the object including the entire object.
The reconstructed RF images can be RF reflection images which are preferably captured in a millimeter or microwave wavelength range. The reconstructed RF images can be 3D images which comprise a number of voxels. In particular, a series of RF images is reconstructed.
The motion sensor can be a camera, a laser based sensor, a sound based sensor, a sonic sensors, such as an ultrasonic sensor. The motion sensor could also be a sensor (information) indicating the speed of a conveyor belt or the speed of a robot. The motion sensor can be configured to carry out a single measurement during the capture of the RF images, wherein the movement velocity of the at least one body part can be determined based on a Doppler Determination.
The movement data may comprise the movement velocity of one, two or more body parts (e.g., arms, legs, torso) of the person and/or of one, two or more parts of the object. The movement data may comprise movement velocity of parts moving at different rates or with different movement velocities, respectively.
In case a cost function is used to reduce the motion blurring, the step of reconstructing 13 the RF images may comprise the further sub-steps:

- successively applying (choosing) different (known) movement data to the raw measurement data;
- for each of the different movement data, evaluating the motion blurring of a reconstructed RF image by using a cost function; and
- selecting at least one of the thus reconstructed RF images as designated RF image based on the result of the evaluation.

In other words, different movement data are applied to the raw measurement data and reconstructed RF images are generated for each "set" of different movement data. The different movement data may comprise a plurality of different datasets. For instance, a first dataset describes a forward movement, and a second dataset describes a backwards movement. Further datasets may describe a two-dimensional and a three-dimensional movement. The datasets can be stored in a memory. Based on the result of the cost function, the "best" reconstructed RF image, i.e. the RF image with the least blurring, can be chosen. This approach is similar to an "auto focus" function, in that different solutions for image processing are applied successively and the best one is chosen.

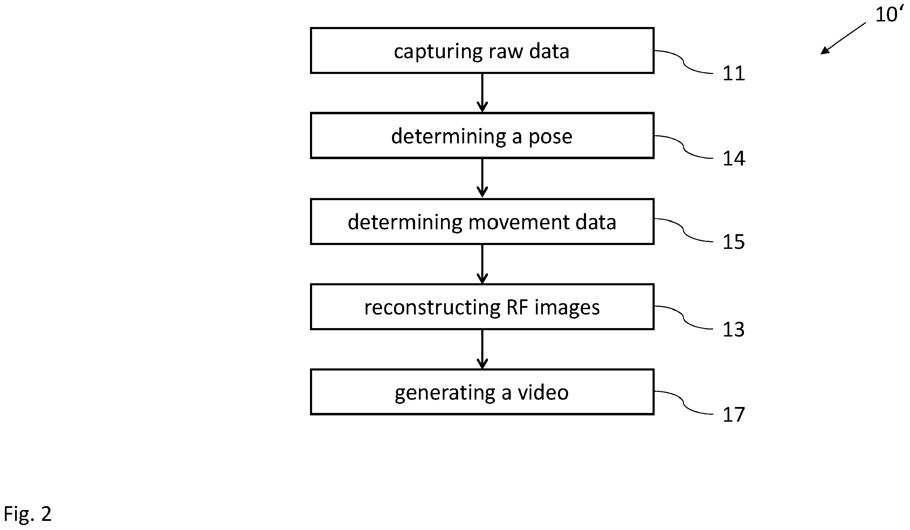

Fig. 2 shows a flow diagram of a method 10' for RF imaging according to an embodiment.

The method 10' shown in Fig. 2 comprises steps of the method 10 shown in Fig. 1 and the additional step of:

- determining 15 the movement data, wherein the movement data comprise a movement velocity of the at least one moving part of the person and/or object.

For instance, the movement data are determined 15 based on an analysis of RF images which are generated (for example conventionally reconstructed) based on the raw measurement data. These (for example conventionally) generated RF images may correspond to the reconstructed RF images prior to removal of the (more severe) motion blurring.

In particular, the methods 10, 10' may comprises the additional step of: (for example conventionally) generating the RF images based on the raw data prior to reconstructing the RF images. In particular, at least one of the (for example conventionally) generated RF images comprises a motion blurring caused by the movement of the at least one part of the person and/or object.

When determining 15 movement data based on the (for example conventionally) generated RF images, the movement velocity can be determined based on a displacement of certain voxels in at least one of the (for example conventionally) generated RF images, in particular a displacement of the voxels that represent the at least one body part or part of the object.

For instance, when determining 15 the movement data and/or when reconstructing 13 the RF images, the movement of the at least one part of the body or object is approximated as a three-dimensional movement. Thus, the movement in the RF images can accurately be compensated in all dimensions of the 3D image. This can be done by estimating the movement velocity of a voxel in an RF image with a 3D vector. In other words, in the determined movement data, the movement velocity can be represented by at least one 3D vector. An approximation as a two-dimensional movement would also be possible.

Alternatively, when determining 15 the movement data and/or when reconstructing 13 the RF images, the movement of the at least one part of the body or object is approximated as a one-dimensional movement, in particular along a main direction of movement of the person or object. For instance, only the main movement direction of at least one body part, e.g. arm or leg, is investigated, without considering other movement directions, e.g. caused by a bouncing movements of the body part. Thus, in this alternative, the movement velocity is represented by a vector along single coordinate axis (for example an X-direction). The same could be assumed for the movement of the object which might be transported by a conveyor belt or a robot.

The movement data may comprise movement velocity of two or more body parts of the person or parts of the object, wherein at least two of the two or more body parts move with different movement velocities. In particular, the movement data can comprise a relative velocity (i.e., a velocity difference) of the two or more body parts. The motion blurring is, for instance, caused by the movement of some but not all of the two or more body parts. For instance, the movement of arms or legs causes blurring while torso or head are not blurred. During processing, this motion blurring caused by the respective body parts can be reduced.

The movement data can also be determined 15 based on a measurement of a motion sensor, in particular a camera, a laser, or a sonic sensor, during the capturing of the series of raw measurement data. The motion sensor could also be a sensor or an information about the speed of a conveyor belt or a robot.

The method 10' shown in Fig. 2 may further comprises the optional step of:

- determining 14 a pose of the person and/or an orientation of the object in the generated RF images.

The pose may indicate postures and/or positions of body parts of the person or parts of the object in the respective RF image.

The determination 14 of the pose may facilitate the compensation of movement by different body parts of the person or parts of the object moving at different velocities.

The pose can be a walking pose. Determining the pose may comprise the step of: generating an avatar of the person, wherein said avatar represents the pose of the person in the at least one RF image.

Further, the method 10' may comprise the additional and optional step of:

- generating 17 a video or a video sequence based on the reconstructed RF images after the reduction of the motion blurring. Thereby, the reconstructed RF images can form the frames of the video respectively video sequence.

The methods 10, 10', in particular the reconstructed RF images respectively the video sequence, can be used for threat detection.

In particular, the methods 10, 10' can be used in walk through security scanners to reduce the effect of motion blurring caused by body parts moving at different rates or faster than a threshold velocity of the scanner.

However, the methods 10, 10' can also be used in stationary security scanners, i.e. security scanners where the person needs to stay still during a scan, to compensate for accidental movements made by the person, thus, enhancing the accuracy of the scanner and reducing false alarm rate.

However, the methods 10, 10' can also be used a production scanner used for analyzing products. It could be possible that for example parts of a car (for example a car wing) which are carried by a conveyor belt or a robot are analyzed whether they are undamaged before they are further used. This analysis could be performed during the movement of the parts. This analysis is non-destructive testing (NDT). The system could be arranged at the end of a production line.

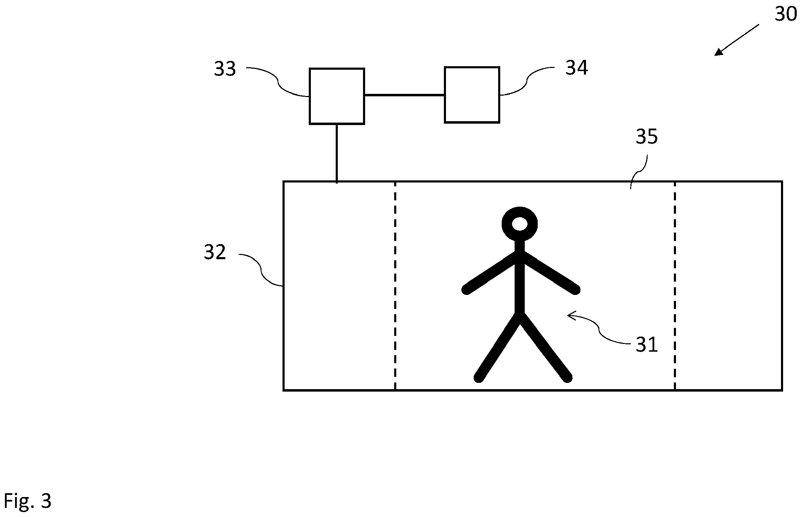

Fig. 3 shows a schematic diagram of a system 30 for RF imaging according to an embodiment.

The system 30 comprises an RF imaging unit 32 configured to capture a series of raw measurement data of a person 31 and/or object, wherein at least a part of the person 31 and/or object moves during the capturing of the series of raw measurement data, and a processing unit 33 configured to reconstruct RF images based on the raw measurement data and on movement data. The processing unit 33 is configured to use the movement data to reduce a motion blurring caused by the movement of the at least one part of the person and/or object in at least one of the reconstructed RF images.

The system 30 can form a walk-through personal security scanner. The system 30 can be configured to capture the series of RF images while the person 31 walks through an examination area 35 of the scanner.

Alternatively, the system 32 can also form a conventional stationary security scanner, where the person 31 needs to stand still in the examination area 35 during the capture of the series of RF images. For instance, the processing of the images allows for compensating motion blurring caused by accidental movements in such stationary scanners. In case of a blurry image or failed correction or if the detected velocity exceeds some predefined threshold, an operator of the system 30 can also repeat the measurement.

Alternatively, the system 32 can also be a production scanner used for analyzing products. It could be possible that for example parts of a car (for example a car wing) which are carried by a conveyor belt or a robot are analyzed whether they are undamaged before they are further used. This analysis could be performed during the movement of the parts. This analysis is non-destructive testing (NDT). The system could be arranged at the end of a production line.

The RF imaging unit 32 may comprise an emitter configured to emit RF radiation (e.g., millimeter wave radiation) towards the person 31 and/or an object (like a production part) and a detector to detect a reflection of said RF radiation from the person.

The processing unit 33 can comprise a microprocessor and/or a memory.

The processing unit 33 can be configured to (for example conventionally) generate RF images based on raw measurement data from the RF imaging unit 32 and to determine the movement data based on an analysis of the (for example conventionally) generated RF images. These (for example conventionally) generated RF images then comprise motion blurring.

In particular, the processing unit 33 can be configured to determine the movement velocity of the at least one body part of the person 31 and/or the object based on a displacement of voxels in at least one of the (for example conventionally) generated RF images.

The system 30 can further comprise an optional motion sensor 34 configured to measure a movement of the person 31 and/or object during the capturing of the raw measurement data. The measurement by the motion sensor 34 can be forwarded to the processing unit 33 which can be configured to determine the movement data and, in particular, the movement velocity of the at least one body part and/or at least a part of the object based on said measurement from the motion sensor 34. This can be done instead of or in addition to the determination of the movement data, respectively movement velocity, based on RF images themselves.

The motion sensor 34 can comprise a camera, a laser, or a sonic sensor. The motion sensor 34 could also detect the speed of a conveyor belt or robot carrying the object. In that case, the motion sensor could also be part of the conveyor belt system or the robot. The information regarding the speed could then transmitted to the system 30 using cables and/or in a wireless manner.

The processing unit 33 can further be configured to determine the movement velocity of the at least one body part and/or of at least one part of the object based on a cost function. For instance, even without information on the actual movement velocity of the at least one body part, different velocity estimates can be inserted in the cost function, and the velocity estimate that minimizes or maximizes the cost function can be chosen.

The system 30 can be configured to carry out the methods 10, 10' shown in Figs. 1 and 2.

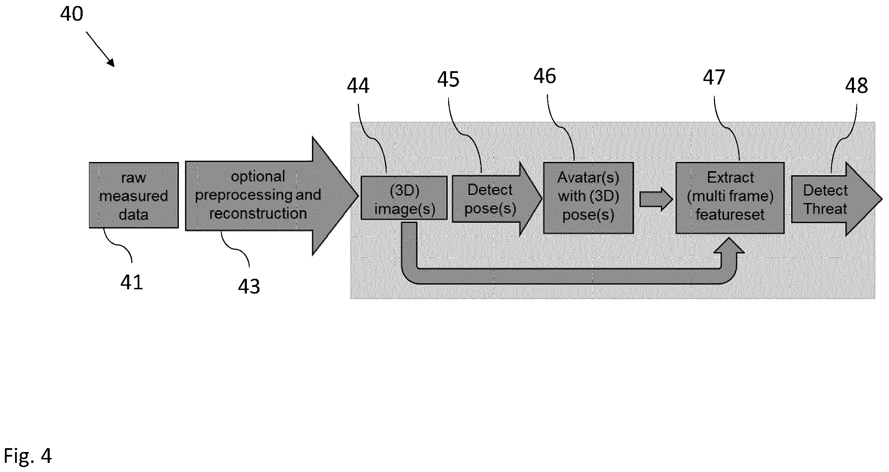

Fig. 4 shows a flow diagram of a method 40 for RF imaging according to an embodiment.

The method 40 comprises the capture of a series of raw measurement data 41, e.g. with the RF imaging unit 32 shown in Fig. 1 followed by a preprocessing and reconstruction 43 steps to obtain a 3D image 44 or a series of 3D images showing a person under investigation. The preprocessing step is optional. The preprocessing step is optionally used to further enhance image quality and/or to apply calibration information.

In a subsequent step 45, a pose of the person in the 3D image(s) can be detected and a virtual avatar 46 of the person can be generated based on the detected pose. During or before the avatar 46 generation, a motion blurring in the 3D image(s) 44 due to a movement of body parts of the person can be reduced, e.g. according to step 13 of the methods 10, 10' shown in Figs. 1 and 2.

Based on the generated avatar 46, a multi-frame feature-set can be extracted 47, i.e. certain features and/or objects can be detected in the captured images, which can be used in a subsequent step 48 for threat detection.

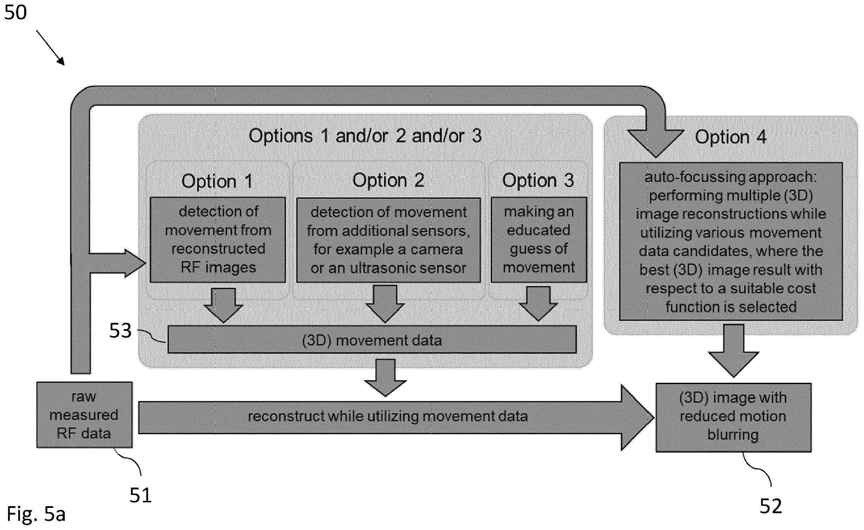

Fig. 5a shows a flow diagram of a method 50 for RF imaging according to an embodiment.

The method 50 comprises four alternative approaches to generate reconstructed RF images 52 with reduced motion blurring based on raw measurement data 51.

Thereby, three approaches (options 1-3) are based on the generation of movement data which is then used to generate the reconstructed RF images 52 with reduced motion blurring. A fourth approach (option 4) is based on a cost function.

According to the first approach (option 1), the series of raw measurement data 51 are used to calculate a series of RF images. This is preferably done in a conventional manner. At least one image contains a blurring due to movement of a person and/or object. The series of (for example conventionally) calculated images are used to calculate the movement data 53. This movement data can then be used to reconstruct (improved) RF images, i.e. RF images with reduced motion blurring, based on the raw measurement data. In that case, the raw measurement data are used twice.

According to the second approach (option 2), a sensor is used to measure the movement data separately. The RF image can then be reconstructed by using this movement data and the raw measurement data. In this approach, (for example conventionally) calculated RF images comprising a blurring are not required. Preferably, the raw measurement data are therefore only used once.

According to the third approach (option 3), the movement data is estimated, e.g. based on an educated guess or on historical data.

According to the fourth approach (option 4) no movement data is determined and instead a cost function is used. In this approach, different existing movement data are applied to the raw measurement data 51 to reconstruct an RF image. This step is repeated for a plurality of different known movement data. For Example, a first movement data represents a person moving forwards, a second movement data represents a person moving backwards (one-dimensional movement), further movement data represent two-dimensional and three-dimensional movement. Based on the result of the cost function, the "best" image (i.e., minimal blurring) can be selected.

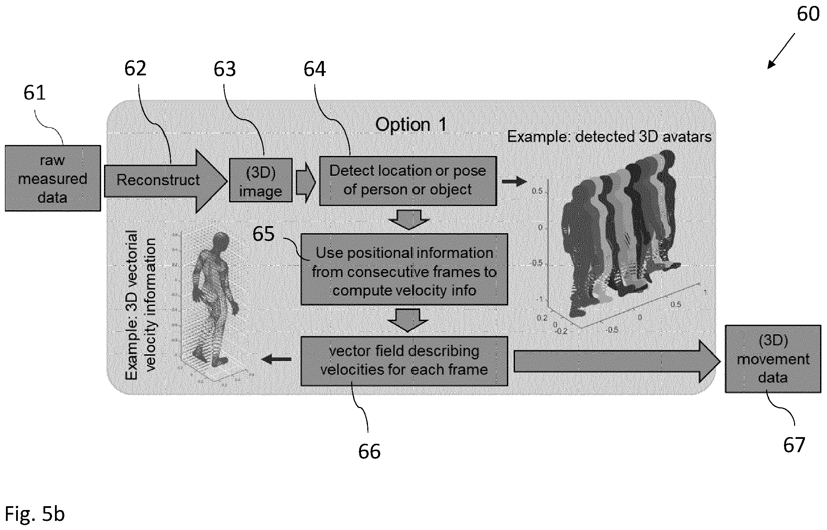

Fig. 5b shows a method 60 for determining movement data according to the first approach shown in Fig. 5a.

The method comprises the capture of a series of raw measurement data 61, followed by a reconstruction 62 steps to obtain a 3D image 63 or a series of 3D images showing a person or object under investigation. Subsequently, a location or pose of the person or object can be detected 64. In the step 64, a respective avatar with a 3D pose of the person can be generated for one, more or all of the 3D image(s).

In a subsequent step 65, positional information from consecutive frames can be used to compute velocity information. Based on this velocity information a 3D vector field 66 can be generated which describes the velocity of moving body parts of the person within each selected frame (3D image). Based on this vector field, the movement data can be generated 67. Obviously, this could also be the case for an object.

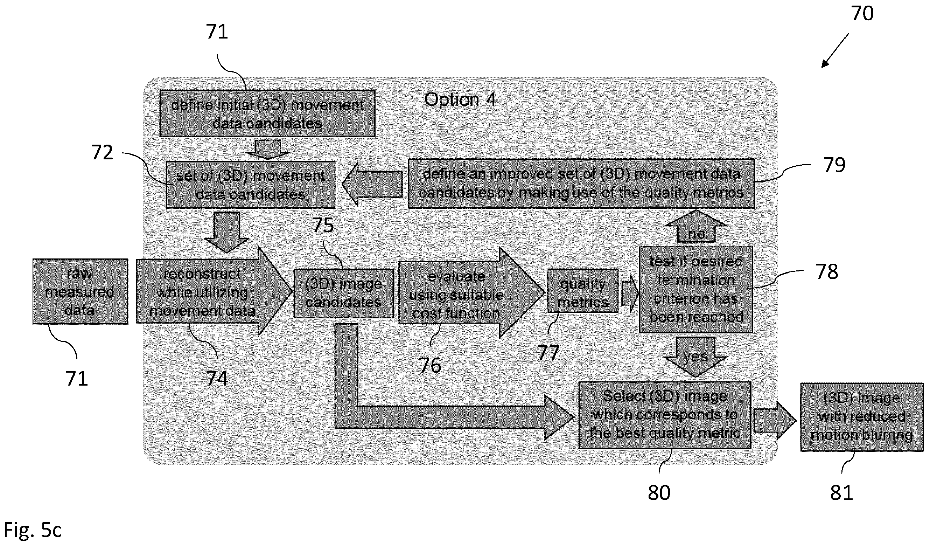

Fig. 5c shows a flow diagram of a method 70 for RF imaging according to the fourth approach shown in Fig. 5a. The method 70 is based on the use of a cost function.

The method 70 comprises: defining 71 suitable (3D) movement data candidates, and choosing 72 a set of said movement data candidates which is subsequently applied 74 to raw measurement data 73 in order to generate RF image candidates 75. These RF image candidates 75 are subsequently evaluated 76 using a suitable cost function. The cost function is used to determine quality metrics 77 for the RF image candidates 75. Subsequently, it is tested if the quality metrics meet a desired termination criterion. If the criterion is not met, an improved set of movement data candidates is defined 79 based on the quality metrics, wherein the improved movement data candidates replaces the previously used movement data candidates 72. If the termination criterion is reached, the RF image candidate that corresponds to the best quality metric is selected 80 and used as reconstructed RF image 81.

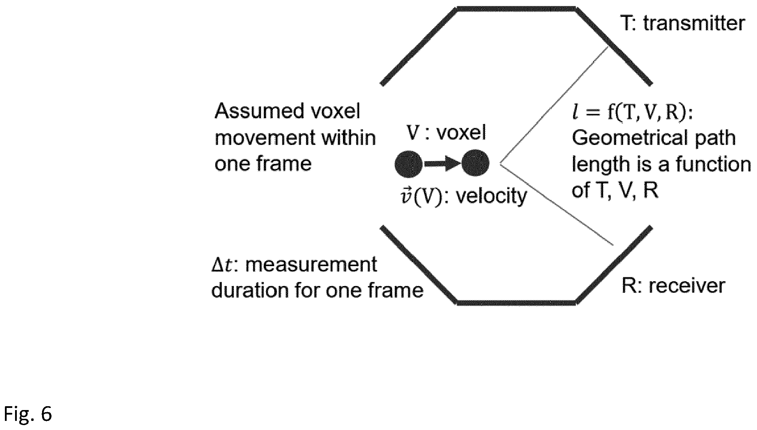

Fig. 6 shows a schematic diagram of an algorithm for image processing according to an embodiment. This algorithm can be adapted to compensate for a movement of body parts of a person or parts of an object during capturing of an RF image.

Fig. 6 depicts a voxel V within one frame, i.e. within one captured RF image, which moves with a velocity v(V) during a measurement duration $\Delta t$, i.e. capture time, of the frame.

When capturing the frame with a system 30 as shown in Fig. 3, in particular with the imaging unit 32, an RF beam is emitted by a transmitter at position T, reflected by a part of the person (e.g., represented by Voxel V in Fig. 6), and received at a receiver at position R. Thus, the geometrical path length *l* of the RF beam can be described as a function of T, V and R, according to: $l = f(T, V, R)$. However, this geometrical path length $l$ does not consider the movement velocity v(V) of the voxel during $\Delta t$.

To improve the algorithm for reconstruction of the RF image, the path length can be extended by a correction term, according to: $l' = l + \Delta l$, which takes into account the change of the path length due to the movement of the voxel. The corrected geometrical path length can be expressed by a Taylor expansion, according to:

$$l' \approx \underbrace{f(T, V, R)\Big|_{T,V,R}}_{l} + \underbrace{\frac{df(T, V, R)}{dV} \cdot \Delta V}_{\Delta l} = l + \Delta l$$

Thereby, the virtual displacement of the voxel V is:

$$\Delta V = \vec{v}(V) \cdot \Delta t$$

Preferably, this adapted algorithm only requires a moderate increase of computational requirements. In particular, existing GPUs or processing units can be used and no additional hardware is required.

All features described above or features shown in the figures can be combined with each other in any advantageous manner within the scope of the invention.

## Claims

1. A method (10, 10') for radio frequency, RF, imaging, comprising the steps of:

   capturing (11) a series of raw measurement data (41) of a person (31) and/or object, wherein at least a part of the person and/or object moves during the capturing of the series of raw measurement data (41); and
   reconstructing (13) RF images based on the raw measurement data and on movement data, wherein the movement data are used to reduce a motion blurring caused by the movement of the at least one part of the person and/or object in at least one of the reconstructed RF images.

2. The method (10, 10') of claim 1, further comprising the step of:
   determining (15) the movement data, wherein the movement data comprise a movement velocity of the at least one moving part of the person and/or object.

3. The method (10, 10') of claim 2,
   wherein the movement data are determined based on an analysis of RF images that are generated based on the raw measurement data.

4. The method (10, 10') of claim 3,
   wherein the movement velocity of the at least one part of the person and/or object is determined based on a displacement of voxels in at least one of the generated RF images.

5. The method (10, 10') of any one of claims 2 to 4,
   wherein the movement data are determined based on a measurement of a motion sensor, in particular a camera, a laser, or a sonic sensor, or the speed of a conveyor belt or a robot carrying the object during the capturing of the series of raw measurement data (41).

6. The method (10, 10') of any one of the preceding claims,
   wherein the step of reconstructing (13) the RF images comprises the following sub-steps:

   successively applying different movement data to the raw measurement data;
   for each of the different movement data, evaluating the motion blurring of a reconstructed RF image by using a cost function; and
   selecting at least one reconstructed RF image as designated RF image based on the result of the evaluation.

**7.** The method (10, 10') of any one of the preceding claims,
wherein, during reconstruction (13) of the RF images, the movement of the at least one part of the person (31) and/or object is approximated as a one-dimensional or two-dimensional or three-dimensional movement.

**8.** The method (10, 10') of any one of claims 1 to 7,
wherein, during reconstruction (13) of the RF images, the movement of the at least one part of the person (31) and/or object is approximated as a one-dimensional movement, in particular along a main direction of motion of the person.

**9.** The method (10, 10') of any one of the preceding claims,
wherein the reconstructed RF images are used for threat detection.

**10.** A system (30) for radio frequency, RF, imaging, comprising:

an RF imaging unit (32) configured to capture a series of raw measurement data (41) of a person (31) and/or object, wherein at least a part of the person (31) and/or object moves during the capturing of the series of raw measurement data (41); and
a processing unit (33) configured to reconstruct RF images based on the raw measurement data and on movement data;
wherein the processing unit (33) is configured to use the movement data to reduce a motion blurring caused by the movement of the at least one part of the person and/or object in at least one of the reconstructed RF images.

**11.** The system (30) of claim 10,
wherein the processing unit (33) is configured to determine the movement data, wherein the movement data comprise a movement velocity of the at least one moving part of the person and/or object.

**12.** The system (30) of claim 11,
wherein the processing unit (33) is configured to generate RF images based on the raw measurement data, wherein the processing unit (33) is further configured to determine the movement data based on an analysis of the generated RF images.

**13.** The system (30) of claim 12,
wherein the processing unit (33) is configured to determine the movement velocity of the at least one part of the person and/or object based on a displacement of voxels in at least one of the generated RF images.

**14.** The system (30) of any one of claims 10 to 13,

wherein the system (30) comprises a motion sensor (34), in particular a camera, a laser, or a sonic sensor or a sensor indicating the speed of a conveyor belt or robot carrying the object;
wherein the processing unit (33) is configured to determine the movement data based on a measurement of the motion sensor (34) during the capturing of the series of raw measurement data.

**15.** The system (30) of any one of claims 10 to 14,
wherein the system (30) is a walk-through security scanner or a production scanner used for analyzing products.

```
                              ┌─────────────────────────────┐
                              │     capturing raw data      │ ╮╮ 11
                              └─────────────────────────────┘
                                            │
                                            ▼
                              ┌─────────────────────────────┐
                              │   reconstructing RF images   │ ╮╮ 13
                              └─────────────────────────────┘
```

10

Fig. 1

EP 4 224 212 A1

```
┌─────────────────────────────┐
│     capturing raw data      │⎯⎯ 11
└─────────────────────────────┘
              │
              ▼
┌─────────────────────────────┐
│      determining a pose     │⎯⎯ 14
└─────────────────────────────┘
              │
              ▼
┌─────────────────────────────┐
│   determining movement data │⎯⎯ 15
└─────────────────────────────┘
              │
              ▼
┌─────────────────────────────┐
│    reconstructing RF images │⎯⎯ 13
└─────────────────────────────┘
              │
              ▼
┌─────────────────────────────┐
│      generating a video     │⎯⎯ 17
└─────────────────────────────┘
```

10′

Fig. 2

Fig. 3

40

44 45 46 47 48

| raw measured data | optional preprocessing and reconstruction | (3D) image(s) | Detect pose(s) | Avatar(s) with (3D) pose(s) | Extract (multi frame) featureset | Detect Threat |

41 43

Fig. 4

50

Options 1 and/or 2 and/or 3

Option 1
detection of movement from reconstructed RF images

Option 2
detection of movement from additional sensors, for example a camera or an ultrasonic sensor

Option 3
making an educated guess of movement

Option 4
auto-focussing approach: performing multiple (3D) image reconstructions while utilizing various movement data candidates, where the best (3D) image result with respect to a suitable cost function is selected

53 (3D) movement data

raw measured RF data

reconstruct while utilizing movement data

(3D) image with reduced motion blurring

51

52

Fig. 5a

EP 4 224 212 A1

Fig. 5b

Fig. 5c

Fig. 6

Europäisches
Patentamt

European
Patent Office

Office européen
des brevets

# EUROPEAN SEARCH REPORT

Application Number

EP 22 15 7181

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/285740 A1 (BOUFOUNOS PETROS T [US] ET AL) 19 September 2019 (2019-09-19) * the whole document * | 1-15 | INV. G01S13/89 G01S13/88 G01S13/86 |
| A | US 2011/084868 A1 (DALY ROBERT PATRICK [US] ET AL) 14 April 2011 (2011-04-14) * paragraph [0017] * | 3,4 | G01S13/58 G01S7/41 |
| A | US 2013/176309 A1 (SARKIS MIKEL [US]) 11 July 2013 (2013-07-11) * paragraph [0008] * | 6 | |
| A | DE 10 2010 051207 A1 (FRAUNHOFER GES FORSCHUNG [DE]) 16 May 2012 (2012-05-16) * the whole document * | 1-15 | |
| A | RU 2 564 693 C1 (RAZEVIG VLADIMIR VSEVOLODOVICH [RU]) 10 October 2015 (2015-10-10) * the whole document * | 1-15 | |

TECHNICAL FIELDS
SEARCHED (IPC)

G01S

The present search report has been drawn up for all claims

| Place of search | Date of completion of the search | Examiner |
|---|---|---|
| Munich | 20 July 2022 | Rudolf, Hans |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.....................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 15 7181

This annex lists the patent family members relating to the patent documents cited in the above-mentioned European search report.
The members are as contained in the European Patent Office EDP file on
The European Patent Office is in no way liable for these particulars which are merely given for the purpose of information.

20-07-2022

| Patent document cited in search report | | Publication date | Patent family member(s) | | Publication date |
|---|---|---|---|---|---|
| US 2019285740 | A1 | 19-09-2019 | JP | 6877647 B2 | 26-05-2021 |
| | | | JP | 2021505891 A | 18-02-2021 |
| | | | US | 2019285740 A1 | 19-09-2019 |
| | | | WO | 2019181043 A1 | 26-09-2019 |
| US 2011084868 | A1 | 14-04-2011 | NONE | | |
| US 2013176309 | A1 | 11-07-2013 | CN | 103278815 A | 04-09-2013 |
| | | | US | 2013176309 A1 | 11-07-2013 |
| DE 102010051207 | A1 | 16-05-2012 | NONE | | |
| RU 2564693 | C1 | 10-10-2015 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **W. F. MOULDER et al.** Development of a high-throughput microwave imaging system for concealed weapons detection. *2016 IEEE International Symposium on Phased Array Systems and Technology (PAST),* 2016, 1-6